# DEMANDE DE BREVET EUROPEEN

(11) **EP 0 884 633 A1**
(43) Date de publication de la demande: **16.12.1998**
(21) Numéro de dépôt: 97490018.5
(22) Date de dépôt: 09.06.1997
(51) Int. Cl.: G03B 17/53, H04N 1/00

(54) **Cabine de libre service photographique de faible encombrement**

(71) Demandeur: S.à.r.l. "Euro-Image", 37540 Saint Cyr sur Loire (FR)
(72) Inventeur:
(74) Mandataire: Lepage, Jean-Pierre

(57) **Abrégé**

L'invention concerne une cabine de libre service photographique.

Selon l'invention, la cabine (1) de libre service photographique, notamment pour la production de photographies d'identité, comportant un espace utilisateur (2) où prend place la personne (4) désireuse d'être photographiée et un espace technique (3) où la photographie est produite, comprenant des moyens de prises de vue (10, 11), caractérisée par le fait que la personne (4) désireuse d'être photographiée est placée debout pour réduire la surface au sol occupée par la cabine (1), pour la réalisation d'une cabine (1) de libre service photographique de faible encombrement optimisant la rentabilité de l'installation.

Application notamment pour la réalisation de photographies d'identité.

## Description

La présente invention concerne une cabine de libre service photographique. Elle trouvera son application notamment pour la réalisation de photographies d'identité.

Elle pourra être utilisée sous forme d'installations automatisées susceptibles d'être mises en place dans des zones de passage et d'achalandage importants telles que des grandes surfaces ou encore des grands magasins.

On connaît à l'heure actuelle de telles installations automatisées pour la production de photographies qui permettent, pour un coût relativement réduit, d'obtenir dans un temps limité des photographies, notamment des photographies d'identité.

Les installations photographiques actuelles comportent communément deux parties, à savoir un espace utilisateur et un espace technique.

L'espace utilisateur est celui dans lequel le client prend place afin d'être photographié. Il comprend un tabouret permettant l'assise de la personne à photographier. Ce tabouret est réglable en hauteur, notamment par vissage ou dévissage, afin d'adapter la position assise de la personne à l'emplacement de l'objectif optique de l'installation.

La zone utilisateur comprend en outre un rideau qui permet de fermer l'espace utilisateur avant la prise des clichés.

Les installations photographiques automatisées actuelles comprennent également un espace technique renfermant l'ensemble des éléments et du matériel nécessaire à la production de la photographie. Notamment, cet espace technique contient le matériel de prises de vue, de développement et le monnayeur.

Jusqu'à une époque récente, la photographie était obtenue par l'intermédiaire de bains chimiques qui avaient l'inconvénient de nécessiter un temps important de développement ainsi qu'un entretien régulier. Progressivement, ces systèmes de développement par réaction chimique ont été remplacés par des installations plus performantes comprenant un système vidéo et une imprimante.

Les installations actuelles présentent différents inconvénients et en premier lieu, elles occupent un espace important sur leur lieu d'implantation.

Cet encombrement est particulièrement dommageable pour deux raisons principales.

Tout d'abord, les localisations où l'implantation d'une installation est intéressante sont généralement des zones de fort passage de piétons, c'est-à-dire des zones d'achalandage important. Tout naturellement, ces zones d'implantation sont fortement demandées et le prix d'achat ou de location au mètre carré est particulièrement élevé.

Les installations actuelles ont des dimensions et notamment une surface au sol importante de par leur conception technique. En conséquence, leur coût d'implantation est élevé compte tenu des charges d'implantation.

En conséquence, les installations actuelles ont une rentabilité qui est loin d'être optimisée.

Un autre inconvénient de l'encombrement important des installations actuelles est qu'il n'est pas possible de les implanter dans de nombreux endroits.

En effet, les zones d'implantation intéressantes telles que les couloirs de grandes surfaces ou de grands magasins présentent généralement des zones perdues de petites tailles qui ne sont pas exploitables dans le cadre des installations photographiques automatisées actuelles.

Il y a donc un marché potentiel qui n'est pas accessible aux installations actuelles.

Un autre inconvénient des installations automatisées actuelles est que leur utilisation nécessite de nombreuses interventions manuelles de la part du client.

En effet, celui-ci doit, dès son entrée dans la cabine, régler la hauteur du tabouret. Celle-ci s'obtient de façon généralement assez fastidieuse et à plusieurs reprises pour obtenir un bon réglage.

Une fois assis, le client doit impérativement fermer le rideau limitant l'espace utilisateur. La fermeture du rideau est importante puisque, si elle n'est pas effectuée, la photo a de grandes chances de ne pas être réussie de par la mauvaise qualité de l'éclairage qui en découlerait.

La nécessité d'effectuer de nombreuses opérations est tout d'abord gênante pour le client et nuit au confort d'utilisation des installations.

Par ailleurs, le fait que l'utilisateur participe aux réglages nécessaires à la prise de vue peut être également dommageable pour la qualité des photographies. En effet, cette participation manuelle du client peut entrainer un mauvais réglage de la hauteur du tabouret ou encore une mauvaise luminosité par oubli de fermeture du rideau.

En conséquence, la qualité des photographies réalisées dans les installations actuelles est souvent considérée par le grand public comme faible. Un client désireux d'une photo de haute qualité se détournera donc généralement de ces installations pour préférer des moyens plus traditionnels. Un marché potentiel des installations automatiques n'est donc pas couvert selon l'état de la technique actuel.

Un autre inconvénient des installations actuelles est que les prises de vue nécessitent l'activation de flashes pour obtenir une luminosité suffisante.

L'utilisation de flashes entrai'ne généralement des photos de qualité irrégulière, la personne photographiée effectuant souvent des grimaces ou des clignements des yeux.

Ce point est un élément supplémentaire quant à la qualité médiocre des photographies selon les dispositifs actuels.

La présente invention a notamment pour but de pallier les inconvénients des installations photographiques automatisées actuellement utilisées.

Elle concerne pour ce faire une cabine de libre service photographique ayant notamment pour but de diminuer la place nécessaire à son implantation.

La cabine selon l'invention présente en effet un encombrement réduit en limitant d'une part la surface au sol occupée par l'espace utilisateur et d'autre part la surface au sol de l'espace technique. Cette réduction d'encombrement découle directement des caractéristiques techniques et de la conception particulière de la cabine selon l'invention.

En conséquence, la présente invention a l'avantage de diminuer le coût d'implantation des installations compte tenu du prix de vente ou de location du mètre carré dans les zones d'installations potentielles. La rentabilité des cabines de libre service photographique selon l'invention est donc optimisée.

Par ailleurs, cette réduction de l'encombrement de la cabine permet son installation à des emplacements qui, jusqu'alors, n'étaient pas exploitables. On pourra en effet facilement implanter la cabine dans des volumes perdus ou des couloirs de grandes surfaces ou de grands magasins.

Un autre but de l'invention est de réaliser une cabine de libre service photographique ne nécessitant aucune intervention de la part de l'utilisateur.

La cabine ici présentée a pour cela l'avantage de ne nécessiter aucun réglage ni aucune opération pour le client. Elle ne comporte en effet aucun rideau à fermer et ne nécessite pas le réglage d'une hauteur de tabouret.

L'invention augmente donc le confort d'utilisation des cabines de libre service photographique. On évite également tout risque d'erreur de la part du client qui est susceptible d'entraîner une mauvaise qualité de la prise de vue.

Un autre but de l'invention est de supprimer l'utilisation de flash lors de la prise de vue.

L'avantage de la cabine de libre service photographique ici présentée est que la prise de vue ne nécessite pas l'emploi de flash. Les photos ont alors une plus grande probabilité d'être réussies et le confort d'utilisation est encore amélioré.

D'autres buts et avantages de la présente invention apparaîtront au cours de la description qui va suivre qui n'est cependant donnée qu'à titre indicatif et qui n'a pas pour but de la limiter.

La présente invention concerne une cabine de libre service photographique, notamment pour la production de photographies d'identité, comportant un espace utilisateur où prend place la personne désireuse d'être photographiée et un espace technique où la photographie est produite, comprenant des moyens de prises de vue, caractérisée par le fait que la personne désireuse d'être photographiée est placée debout pour réduire la surface au sol occupée par la cabine, pour la réalisation d'une cabine de libre service photographique de faible encombrement optimisant la rentabilité de l'installation.

L'invention sera mieux comprise au vu des planches de dessins situées en annexe et qui comprennent :
- la figure 1 présentant une vue générale de la cabine selon l'invention,
- la figure 2 illustrant la formation de moyens selon un mode particulier de réalisation,
- la figure 3 schématisant l'interaction des éléments constitutifs de l'invention,
- la figure 4 constituant une vue de dessus de la cabine selon l'invention lorsque le toit de la cabine est enlevé.

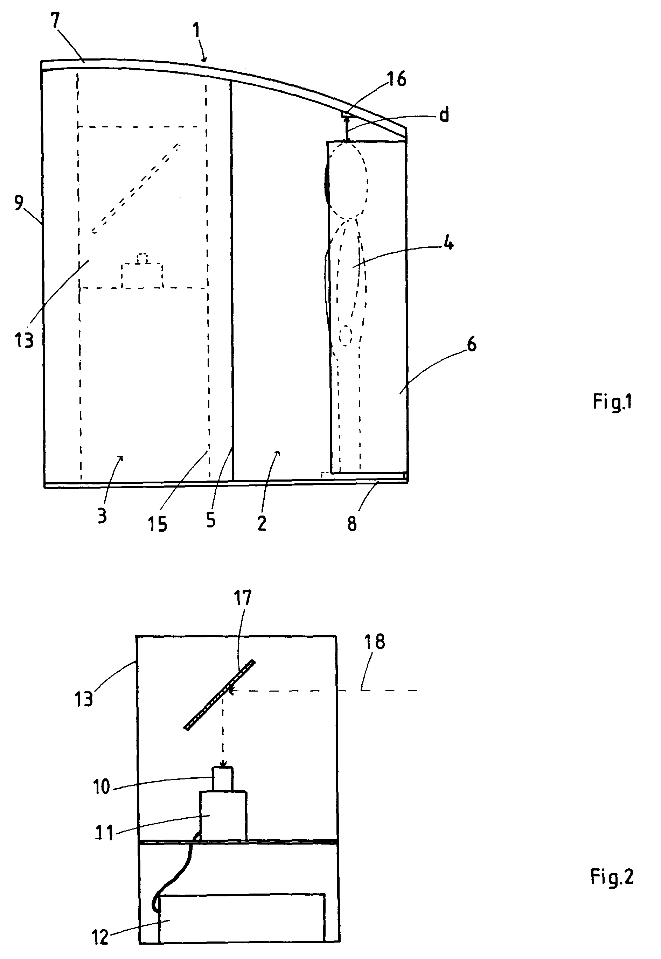

La cabine (1) selon l'invention est constituée de deux parties à savoir un espace utilisateur (2) et un espace technique (3) présentés à la figure 1.

La cabine (1) comprend des parois verticales (9) positionnées sur un sol (8) et surmontées d'un toit (7).

L'espace utilisateur (2) est accessible à l'utilisateur (4) constitué par la personne désireuse d'être photographiée. L'espace utilisateur (2) est la zone où la personne (4) se positionne pour être photographiée.

Selon l'invention, l'espace (2) est très réduit car une des caractéristiques de l'invention est que la personne (4) se tient debout pour la prise de vue.

On évite donc l'utilisation d'un tabouret occupant une place importante. Par ailleurs, la place nécessaire à l'utilisateur (4) debout est bien moindre que s'il était assis.

Tel qu'illustré à la figure 1, l'espace utilisateur (2) est très dépouillé et comprend une paroi séparatrice (5) et une porte (6).

La paroi séparatrice (5) peut recevoir la façade d'un monnayeur (22) ainsi qu'un panneau de façade orientant le choix du client par exemple pour les dimensions des photographies, le nombre de prises de vue ou encore l'option couleur ou noir et blanc.

La paroi séparatrice (5) délimite par ailleurs l'espace utilisateur (2) et l'espace technique (3). Elle doit néanmoins permettre la réception par les moyens de prises de vue (10, 11) des rayons lumineux issus de l'espace utilisateur (2). Dans ce cadre, une partie de sa surface sera constituée dans un matériau transparent. Préférentiellement, on utilisera un miroir sans tain rendant invisible à l'utilisateur (4) l'espace technique (3).

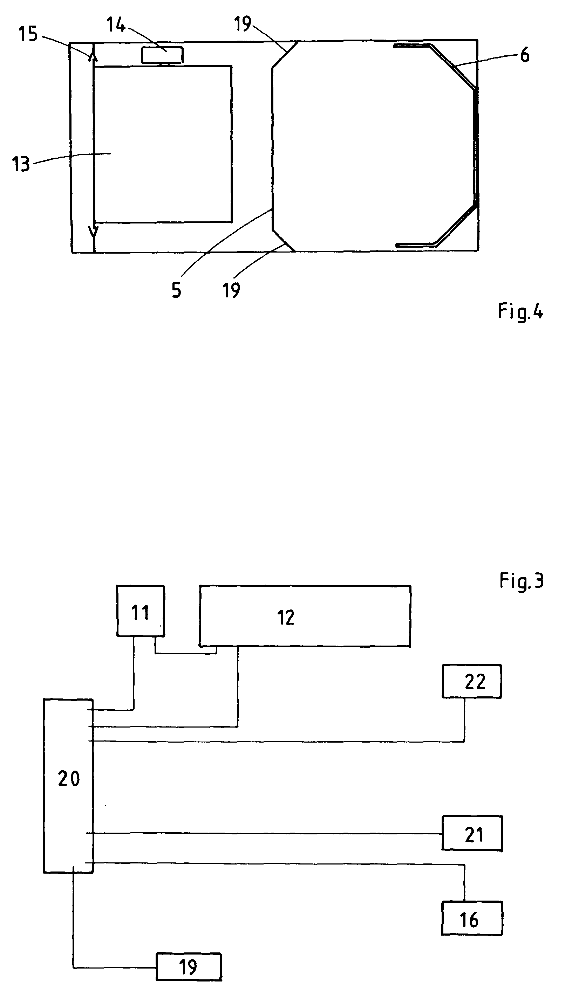

La porte (6) pourra être de diverses conceptions et notamment telle que présentée à la figure 1 et en vue de dessus à la figure 4. De cette façon, la porte (6) est aisément manipulable par l'utilisateur (4) et peut être équipée d'un ressort de rappel pour sa fermeture automatique.

Les formes et dimensions de la cabine (1) et de ses éléments constitutifs seront bien entendu variables mais on cherchera de façon préférentielle à limiter la surface au sol qu'elle occupe. Il est par exemple possible de réaliser une cabine (1) de libre service photographique selon l'invention occupant une surface au sol de l'ordre de 0,7 m². Cette surface très réduite est particulièrement intéressante pour les raisons déjà évoquées et distingue nettement la cabine (1) selon l'invention des installations utilisées jusqu'alors pour lesquelles la surface au sol est généralement de l'ordre de 1,3 à 1,5 m².

Les éléments constituant l'extérieur de la cabine (1) et notamment les parois verticales (9) et le toit (7) pourront être en divers matériaux tels que des tôles en acier revêtues d'une peinture protectrice.

L'espace technique (3) renferme quant à lui les éléments techniques nécessaires à la production de la photographie et notamment les moyens de prises de vue (10, 11).

De façon générale, l'espace technique (3) est totalement clos car il ne nécessite pas d'accès en utilisation courante. Pour l'entretien de la cabine (1), une porte d'accès sera préférentiellement formée sur l'une des parois verticales (9) délimitant l'espace technique (3).

Les moyens de prises de vue (10, 11) seront par exemple constitués par une caméra vidéo (11) munie d'un objectif (10). Les photographies seront réalisées par tout moyen courant et notamment par une imprimante (12) telle qu'une imprimante à sublimation thermique permettant une impression couleur ou noir et blanc.

L'utilisateur (4) de la cabine (1) selon l'invention étant debout dans l'espace utilisateur (2), la cabine (1) comportera de façon préférentielle des moyens de réglage de la hauteur des moyens de prises de vue (10, 11) en fonction de la taille de la personne (4).

Dans un mode particulier de réalisation, ces moyens de réglage sont constitués par :
- un ascenseur (13), motorisé et commandé en translation verticale, sur lequel sont montés les moyens de prises de vue (10, 11),
- des moyens de détermination de la hauteur correcte de prise de vue.

La cabine (1) de libre service photographique ici présentée s'adapte en effet automatiquement à la taille de son utilisateur (4).

Pour ce faire, il s'agit dans un premier temps de déterminer la taille de l'utilisateur et dans un deuxième temps de positionner les moyens de prises de vue en conséquence.

Pour réaliser cette dernière opération, l'invention, dans un mode particulier de réalisation, comprend un ascenseur (13) tel qu'illustré à la figure 2. Selon la figure 2, l'ascenseur (13) est de forme sensiblement parallélépipédique rectangle et est constitué en tôle d'acier. Il comprend des moyens, de conception courante, pour fixer et supporter les constituants de la cabine (1) qu'il a pour objet de déplacer.

L'ascenseur (13) intégré dans l'espace technique (3) est susceptible d'un mouvement de translation verticale. Ce mouvement est commandé suivant la hauteur correcte de prise de vue qui aura été déterminée.

Cette commande peut être effectuée par l'intermédiaire d'un ordinateur (20) ou par tout autre moyen. Par ailleurs, le déplacement de l'ascenseur (13) sera engendré par une motorisation et par exemple, par un moteur électrique (21).

Dans un mode particulier de réalisation, le déplacement de l'ascenseur (13) au moyen du moteur (21) s'effectue par l'intermédiaire d'une courroie dentée (14) entrainée par le moteur (21).

Pour faciliter le déplacement vertical de l'ascenseur et pour limiter la puissance nécessaire de la motorisation, on pourra prévoir un système de contrepoids se déplaçant en sens inverse de l'ascenseur (13) afin de contrebalancer ce mouvement.

De façon générale, il est important pour la qualité de la photographie que le positionnement de l'ascenseur (13) soit effectué de façon précise.

Pour ce faire, la cabine (1) pourra tout d'abord comporter des glissières permettant de guider latéralement l'ascenseur dans son mouvement vertical. On pourra par exemple former des glissières (15) telles qu'illustrées à la figure 4.

Par ailleurs, pour régier de façon précise la hauteur des moyens de prises de vue (10, 11), la valeur du déplacement de l'ascenseur (13) pourra être mesurée au moyen d'un disque indexé solidaire des poulies entraînant la courroie (14) et dont le déplacement angulaire permet de déterminer de façon exacte la position verticale de l'ascenseur (13).

Pour ajuster de façon correcte la hauteur des moyens de prises de vue (10, 11), il s'agit préalablement de déterminer la hauteur correcte de prise de vue.

Pour ce faire, l'invention ici présentée comprend des moyens de détermination de la hauteur correcte de prise de vue.

Dans un mode particulier de réalisation, ces moyens sont constitués par un radar (16). On pourra notamment utiliser un radar (16) à ultrasons placé au niveau du toit (7) de la cabine (1). Ce radar (16) ainsi positionné permet la mesure de la distance (d) séparant la tête de l'utilisateur (4) du toit (7).

Cette mesure, connaissant la distance séparant le sol (8) du toit (7) permet aisément de déterminer la taille de la personne (4). Cette détermination est répercutée au niveau de la commande de l'ascenseur (13) qui peut dès lors être déplacé de façon à positionner les moyens de prises de vue (10, 11) en regard du visage de l'utilisateur (4).

Naturellement, si la photographie doit porter sur une autre partie du corps de l'utilisateur, les moyens de réglage de la hauteur des moyens de prises de vue (10, 11) seront réalisés en conséquence.

L'invention ici décrite permet une prise de vue d'une personne (4) en position debout et un réglage de la cabine (1) en fonction de la taille de différents utilisateurs.

De cette façon, l'espace utilisateur (2) peut être fortement réduit, ce qui limite l'encombrement de la cabine (1) dans sa globalité et restreint la surface au sol qu'elle occupe.

Pour renforcer la réduction d'encombrement de la cabine (1), celle-ci, dan un mode particulier de réalisation, comprend un miroir (17) par lequel transite l'image de la personne (4) à photographier.

Tel que l'illustre la figure 2, le miroir (17) réfléchit les rayons lumineux (18) en provenance de la personne (4) et les renvoie aux moyens de prises de vue (10, 11).

Le miroir (17) permet pour une distance focale donnée de réduire la distance nécessaire entre la personne (4) et les moyens de prises de vue (10, 11).

En effet, les moyens de prises de vue (10, 11) sont généralement réglés avec une distance focale déterminée. Si les rayons lumineux issus de la personne (4) à photographier sont directement reçus par les moyens de prises de vue (10, 11), il n'est pas possible de diminuer la distance séparant la personne (4) des moyens de prises de vue (10, 11). Dans un tel cas en effet, la photographie obtenue présenterait un défaut de mise au point et serait floue.

Pour conserver une distance focale fixe et diminuer la distance séparant la personne (4) et les moyens de prises de vue (10, 11), le miroir (17) constitue un moyen tout à fait approprié.

Tel que l'illustre la figure 2, le miroir (17) est monté sur l'ascenseur (13) en formant un angle de 45° avec la verticale. Par ailleurs, l'objectif (10) des moyens de prises de vue (10, 11) est orienté verticalement et de façon à recevoir les rayons lumineux (18) réfléchis par le miroir (17) et provenant de la personne (4) à photographier.

Ainsi, le miroir (17) et les moyens de prises de vue (10, 11) sont solidaires par l'intermédiaire de l'ascenseur (13) et une grande partie de la distance focale nécessaire à l'obtention d'une image nette est obtenue au sein même de l'espace technique (3) de façon verticale. La composante horizontale de la distance focale est donc réduite et limite l'espace intérieur de la cabine (1) nécessaire à la prise de vue.

Dans un mode particulier de réalisation, l'imprimante (12) est également solidaire de l'ascenseur (13).

Suivant ce mode de réalisation, il est préférable que l'ascenseur (13) revienne en une position de repos après la prise de vue pour permettre la sortie des photographies de l'imprimante (12) à une hauteur constante.

En effet, une fois l'impression réalisée, la photographie est accessible à l'utilisateur, notamment par l'intermédiaire d'un dégagement formé sur l'une des parois verticales (9). Lorsque l'imprimante (12) est solidaire de l'ascenseur (13) et donc mobile en translation, il est important que la sortie de l'impression soit effectuée au niveau du dégagement formé sur la paroi verticale (9). Ainsi, l'ascenseur (13) revient en position de repos ; cette position étant fonction de l'emplacement où l'utilisateur retire les photographies.

De façon préférentielle, le fonctionnement de la cabine (1) est géré par un ordinateur (20) pourvu d'un programme.

L'ordinateur (20) pourra notamment commander le déplacement de l'ascenseur (13) en fonction de la taille déterminée de l'individu. L'ordinateur (20) pourra également commander le retour en une position de repos de l'ascenseur (13) lorsque la prise de vue a été effectuée.

Par ailleurs, on pourra de façon aisée utiliser une commande vocale par l'intermédiaire de l'ordinateur. De cette façon, la cabine (1) selon l'invention sera facilement utilisable pour tout utilisateur (4) et les instructions nécessaires pourront être transmises oralement.

Pour permettre une prise de vue de qualité, l'éclairage de l'espace utilisateur (2) doit être suffisant. Par ailleurs, la luminosité lors de la prise de vue doit être fixée de façon à obtenir des photos d'une qualité stable.

L'éclairage de l'espace utilisateur (2) pourra notamment être réalisé par l'intermédiaire de lampes halogènes placées sur la paroi séparatrice (5).

La figure 4 illustre le positionnement de lampes halogènes (19) à ce niveau.

Dans un mode particulier de réalisation, l'éclairage des lampes halogènes (19) est progressif. En effet, en position de repos, l'éclairage sera limité pour le confort de l'utilisateur (4). Lorsque les opérations de prises de vue seront engagées, la puissance de l'éclairage sera progressivement augmentée pour atteindre le niveau de luminosité fixe nécessaire à une bonne qualité d'image. La montée progressive de puissance des lampes halogènes (19) permet d'accoutumer l'utilisateur à l'évolution de la luminosité.

La cabine (1) selon l'invention s'utilise de façon très pratique. Dans un premier temps, l'utilisateur (4) s'introduit dans l'espace utilisateur (2). Pour ce faire, il ouvre la porte (6) qui se referme automatiquement lorsqu'elle est munie de moyens de retour tels qu'un ressort.

L'espace utilisateur (2) est pendant cette étape éclairé de façon limitée par l'intermédiaire des lampes halogènes (19).

L'utilisateur (4) choisit la prestation qu'il désire et paie par l'intermédiaire d'un monnayeur (22) notamment placé sur la paroi séparatrice (5).

Une commande vocale peut aider l'utilisateur (4) dans l'ensemble de ces opérations.

A cet instant, l'utilisateur (4) n'a plus aucune intervention à effectuer pour la prise de vue.

En effet, la prise de vue sera effectuée de façon entièrement automatisée.

Dans un premier temps, les moyens de détermination de la hauteur correcte de prise de vue sont activés et permettent de déduire la taille de l'utilisateur (4).

Comme indiqué précédemment, cette mesure pourra être effectuée par un radar à ultrasons qui déterminera la distance séparant le haut de la tête de l'utilisateur (4) du toit (7).

Une fois connue la taille de l'utilisateur, les moyens de prises de vue (10, 11) sont déplacés par l'intermédiaire de l'ascenseur (13) motorisé notamment par un moteur (21) électrique entraînant une courroie (14) et commandé par l'ordinateur (20).

L'ascenseur (13) termine sa translation verticale lorsque les moyens de prises de vue (10, 11) sont positionnés de façon adéquate en fonction de la taille de l'utilisateur (4).

La mesure de la valeur du déplacement et de la position de l'ascenseur (13) pourra être effectuée par tout moyen et notamment par l'intermédiaire d'un disque indexé.

Bien entendu, dans le mode de réalisation où la cabine (1) comporte un miroir (17) intermédiaire entre l'utilisateur (4) et les moyens de prises de vue (10, 11), c'est le positionnement du miroir (17) qui est réalisé en vis-à-vis du visage de l'utilisateur (4) tel que cela est illustré à la figure 2.

Parallèlement aux réglages de la hauteur des moyens de prises de vue (10, 11), l'intensité de l'éclairage de l'espace utilisateur (2) est augmentée de façon progressive pour parvenir à la luminosité adéquate à la bonne prise de vue.

La prise de vue peut alors être effectuée notamment au moyen d'une caméra vidéo munie d'un objectif et connectée à une imprimante telle qu'une imprimante à sublimation thermique.

Une fois la prise de vue effectuée, l'impression est enclenchée. L'utilisation de moyens modernes d'impression permet d'une part d'assurer une bonne qualité d'image et d'autre part de limiter fortement le temps d'impression. A titre indicatif, ce temps peut, en utilisation normale, être de l'ordre de 60 secondes.

En cours d'impression, l'ascenseur (13) est commandé de façon à revenir en position de repos pour permettre la sortie des photographies à un emplacement déterminé où l'utilisateur pourra les retirer.

La cabine (1) ainsi décrite évite toute intervention de l'utilisateur (4) et assure notamment un bon cadrage de la photographie et une luminosité constate.

Par ailleurs, l'encombrement et particulièrement la surface au sol occupée par la cabine (1) est limité, ce qui assure à la cabine (1) une bonne performance en terme de rentabilité économique.

Enfin, l'utilisation de moyens informatiques assure un fonctionnement fiable de l'installation, notamment suivant la configuration illustrée à la figure 3.

Cette figure montre en effet les relations entre différents moyens de l'invention et leur interaction avec l'ordinateur (20).

On pourra notamment placer les moyens informatiques et principalement l'ordinateur dans la partie basse de l'espace technique (3).

## Revendications

1. Cabine (1) de libre service photographique, notamment pour la production de photographies d'identité, comportant un espace utilisateur (2) où prend place la personne (4) désireuse d'être photographiée et un espace technique (3) où la photographie est produite, comprenant des moyens de prises de vue (10, 11), caractérisée par le fait que la personne (4) désireuse d'être photographiée est placée debout pour réduire la surface au sol occupée par la cabine (1), pour la réalisation d'une cabine (1) de libre service photographique de faible encombrement optimisant la rentabilité de l'installation.

2. Cabine (1) de libre service photographique, selon la revendication 1, caractérisée par le fait que la personne (4) désireuse d'être photographiée est debout dans la zone utilisateur (2) et que la cabine (1) comporte des moyens de réglage de la hauteur des moyens de prises de vue (10, 11) en fonction de la taille de la personne (4).

3. Cabine (1) de libre service photographique, selon la revendication 2, caractérisée par le fait que les moyens de réglage de la hauteur des moyens de prises de vue (10, 11) sont constitués par :
- un ascenseur (13) motorisé et commandé en translation verticale, sur lequel sont montés les moyens de prises de vue (10, 11),
- des moyens de détermination de la hauteur correcte de prise de vue.

4. Cabine (1) de libre service photographique, selon la revendication 3, caractérisée par le fait que les moyens de détermination de la hauteur correcte de prise de vue sont constitués par un radar (16) à ultrasons placé au niveau du toit (7) de la cabine (1) et mesurant la distance (d) séparant la tête de la personne (4) du toit (7), permettant de déterminer la taille de la personne (4) pour régler la hauteur des moyens de prises de vue (10, 11).

5. Cabine (1) de libre service photographique, selon l'une des revendications 1 à 4, caractérisée par le fait que l'image de la personne (4) à photographier parvient aux moyens de prises de vue (10, 11) par l'intermédiaire d'un miroir (17) permettant, pour une distance focale donnée, de réduire la distance nécessaire entre la personne (4) et les moyens de prises de vue (10, 11), pour la réduction de la surface au sol de l'espace technique (3).

6. Cabine (1) de libre service photographique, selon la revendication 5, caractérisée par le fait que :
- le miroir (17) est monté sur l'ascenseur (13) en formant un angle de 45° avec la verticale,
- l'objectif (10) des moyens de prises de vue (10, 11) est orienté verticalement et de façon à recevoir les rayons lumineux (18) réfléchis par le miroir (17) provenant de la personne (4) à photographier.

7. Cabine (1) de libre service photographique, selon l'une des revendications 3 à 6, caractérisée par le fait que l'ascenseur (13) est mû en translation par l'intermédiaire d'une courroie (14) dentée entraînée par un moteur électrique et que la translation est guidée par des glissières (15); un contrepoids limitant la puissance nécessaire de la motorisation.

8. Cabine (1) de libre service photographique, selon la revendication 7, caractérisée par le fait que les moyens de prises de vue (10, 11) sont constitués par une caméra vidéo (11) connectée à une imprimante (12) solidaire de l'ascenseur (13).

9. Cabine (1) de libre service photographique, selon la revendication 8, caractérisée par le fait que l'ascenseur (13) revient en une position de repos après la prise de vue pour permettre la sortie des photographies de l'imprimante (12) à une hauteur constante fonction de l'emplacement où l'utilisateur retire les photographies.

10. Cabine (1) de libre service photographique, selon l'une des revendications 3 à 9, caractérisée par le fait que le fonctionnement de la cabine (1) est géré par un ordinateur (20) pourvu d'un programme commandant notamment le déplacement de l'ascenseur (13) et l'allumage progressif des éclairages (19) de l'espace utilisateur (2).
